# EUROPEAN PATENT SPECIFICATION

(11) **EP 1 139 730 B1**
(45) Date of publication and mention of the grant of the patent: **31.03.2004**
(21) Application number: 99965669.7
(22) Date of filing: 21.12.1999
(51) Int. Cl.: A01K 61/02

(54) **METHOD FOR COMMERCIAL EDIBLE FISH BREEDING OF EUROASIAN PIKE-PERCH**
VERFAHREN ZUM KOMMERZIELLEN ZÜCHTEN VON EURO-ASIATISCHEM ZANDER
PROCEDE D'ELEVAGE COMMERCIAL DE POISSON COMESTIBLE APPLIQUE AU SANDRE D'EURASIE

(30) Priority: 22.12.1998 SE 9804488
(43) Date of publication of application: 10.10.2001
(73) Proprietor: Östgös AB, 614 96 Östra Ryd (SE)
(72) Inventor: WASTESON, Christer, S-614 96 Östra Ryd (SE)
(74) Representative: Willquist, Bo
(86) International application number: PCT/SE1999/002434
(87) International publication number: WO 2000/036908

(56) References cited:
- US-A- 4 237 820
- DATABASE WPI Week 199709, Derwent Publications Ltd., London, GB; AN 1996-158998, XP002947804 & SU 1 700 802 A1 (AZOVO FISH ECON. RES. INST) 20 August 1995

## Description

The present invention relates to a method for commercial edible fish rearing of Euro-asiatic pike-perch, Stitzostedion lucioperca, as specified in the pre-characterising clause of claim 1.

A number of types of fish, such as rainbow trout, for example, are nowadays reared commercially by a large number of edible fish breeders. Common to all the types of fish reared is that that can be reared on dry feed.

Euro-asiatic pike-perch (Stitzostedion lucioperca) is a predatory fish, which as fry normally live on plankton and insect larvae, later going on as young fish to eat fish fry and crustaceans and then, as adult fish, eating only fish. Commercial edible fish rearing of Euro-asiatic pike-perch is not possible at present since the pike-perch is a predatory fish, which in rearing would need to be fed with live feed. Rearing would also be rendered more difficult due to the fact that the reared fish, if not strictly sorted into various sizes, would eat one another. The rearing of live feed in such quantities that they could be used for commercial rearing of edible fish becomes both complicated, resource-intensive and very costly, which is why, as things stand at present, no such rearing is undertaken. At present rearing is confined to fish for release, which are then allowed to grow at liberty in the watercourses into which they are released.

An object of the present invention is to create a method of the type stated in the introductory part, which will render the commercial edible fish rearing of Euro-asiatic pike-perch (Stitzostedion lucioperca) possible. The object has been achieved by a method which has the characteristics specified in claim 1.

Preferred embodiments of the method also have any or some of the characteristics specified in the subordinate clauses.

The method according to the invention allows the pike-perch to assimilate the energy present in non-live low-calorie feed. By means of the method the pike-perch can develop from a certain larva stage to fry and then to fully grown fish using dry feed as the sole source of nutrition. In this way the commercial rearing of edible fish is possible in re-circulating systems or cages.

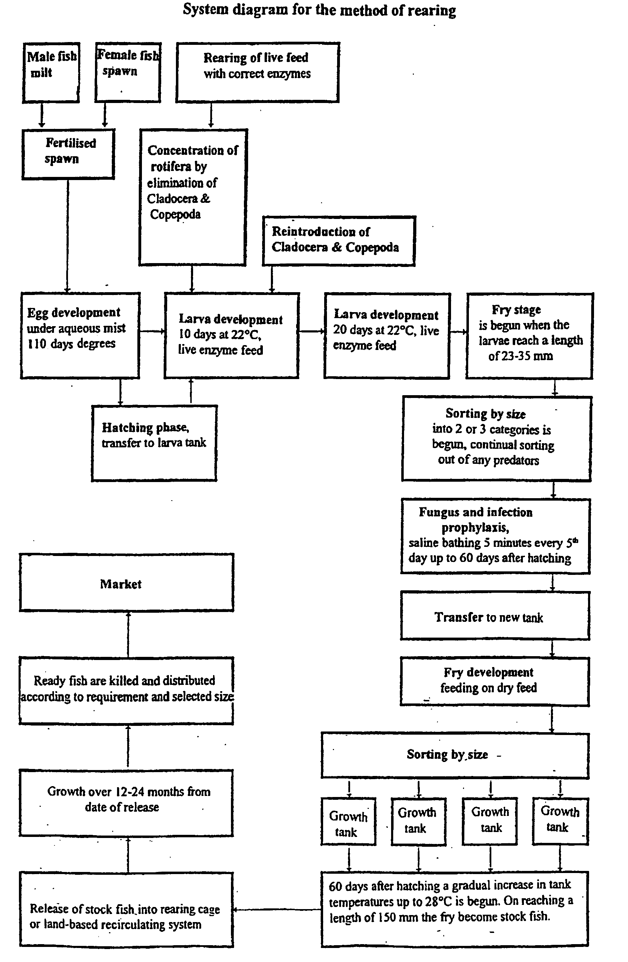

The invention will be explained in more detail below with the aid of an example of a preferred embodiment of the present invention and with reference to the attached drawing, which shows a system diagram of the rearing method according to the invention.

The rearing method illustrated in the system diagram consists in a method of getting the intestinal system of the pike-perch to accept dry feed through enzymatic opening of the intestine at the larva stage. In the fry stage and the adult stage the pike-perch continues to assimilate dry feed and grows in the fish farm in the same way as fish of the salmon family. Due to this treatment during the larva stage the pike-perch also loses much of its natural hunting instinct, so that it can be reared by aquaculture using the dry feed as sole nutrition without the fish starting to eat one another.

In implementing the method according to the invention a medium consisting of rotifera and Cladocera together with Copepoda is first prepared in a hatching and larva tank. In parallel with this, the fertilised eggs are developed in aqueous mist under approximately 110 day degrees until they are ready to hatch. Before the mature eggs are delivered to the hatching and larva tank, Cladocera and Copepoda therein are eliminated in a known manner by the addition of organic phosphoric acid (1g/m³ of water). This elimination is performed in order to increase the growth of rotifera. Before hatching, the quantity of rotifera in the water of the hatching and larva tank is then checked. The quantity of rotifera must preferably lie within the range 0.5 - 2 ml of biomass per 100 litres of water when the mature eggs are released into the hatching and larva tank.

The mature eggs are then released into the hatching and larva tank, where they will hatch, following which the larvae initially feed on their yolk sacs, before eventually beginning to eat rotifera. Around 2 ml of biomass composed of Cladocera and Copepoda is now added to the hatching and larva tank to be developed for the last part of the enzymatic activity. During the first phase, which lasts about 10 days, the temperature of the tank must preferably be approximately 22°C. Towards the end of the ten days the Cladocera and Copepoda will have grown in the hatching and larva tank and are now present in abundant quantity for the pike-perch, which now go over to feeding on these. During this time the enzymatic activity is initiated in the intestinal system of the larvae. The enzymatic activity is then allowed to continue for around a further 20 days at the same tank temperature, that is to say approximately 22°C. The pike-perch now leave the larva stage and enter the fry stage. When the fry have reached a length of approximately 25 to 35 mm they are sorted into a number of size categories, appropriately 2 or 3 groups, in order to reduce the competition within the groups.

From this stage onwards a periodic bathing of the fry in water with a salt concentration of approximately 0.6% must be performed for around 5 minutes every fifth day, in order to prevent parasitic and fungal attack.

Following the preliminary stages the 25-35 mm long fry, sorted into groups and after salt bathing as outlined above, are transferred to rearing tanks with a maximum salt content of 0.5%. The enzyme and the biological process from rotifera and Cladocera and Copepoda has now prepared the intestine of the fry so that they can assimilate the energy in a dry feed. Accustomisation is begun with a suitable dry feed with a free-flowing character and a feed diameter of around 1 mm.

Periodic bathing for 5 minutes in water with a salt content of 0.6% every fifth day must be continued until approximately 60 days after hatching. During this time any predators are also sorted out.

Repeated sorting according to size can hereafter be undertaken, as required, and the fish divided up between further rearing tanks for growth.

After about 60 days from the date of hatching the temperature in the rearing tanks is gradually increased to approximately 28°C, following which continuous growth commences, during which the young fish change from fry into fish. When the fish have reached a stock fish stage with a length of approximately 150 mm they can be placed in rearing cages or a recirculating fish farm for continued growth.

Growth then occurs with controlled supply of dry feed and the fish can be transferred to larger tanks or cages, as required. It has emerged from experiments that the rate of growth can be further increased by controlling the temperature and light during the period of growth. Between 12 and 24 months after the stock fish stage the fish, depending on the type of rearing, will have reached a size at which killing can be begun. If the fish are transferred to and reared in a recirculating system with a water temperature in the order of 25-28°C, they will be ready for killing after just 12 months. If the fish are transferred to and reared in cages, the rate of growth will depend on the temperature in the watercourse in which the cages are placed, which usually means a water temperature of essentially less than 20°C, so that the fish will only be ready for killing after approximately 24 months. The fish can finally be killed and distributed in the known way.

## Claims

1. Method for commercial edible fish rearing of Euro-asiatic pike-perch, Stitzostedion lucioperca, **characterised in that** the intestinal system of the pike-perch is made to accept and to assimilate the energy in a dry feed, the mature, fertilised pike-perch spawn being released into a hatching tank containing rotifera, where it is allowed to hatch, following which a smaller quantity of Cladocera and Copepoda is added to the hatching tank and the pike-perch is allowed to feed in the hatching tank, initially on rotifera and then on Cladocera and Copepoda, until the pike-perch larvae have left the larva stage and passed to a fry stage and reached a length of approximately 25-35 mm, following which the fry are transferred to a rearing tank and accustomisation to dry feed is begun, following which rearing to a stage at which the fish are ready for killing is undertaken with dry feed as the sole source of nutrition for the fish.

2. Method according to claim 1, **characterised in that** the quantity of rotifera in the hatching tank is initially maintained at around 0.5 to 2 ml of biomass per 100 litres of water.

3. Method according to claim 1 or 2, **characterised in that** Cladocera and Copepoda are initially added to the hatching tank in a quantity amounting to approximately 2 ml of biomass.

4. Method according to any of the preceding claims, **characterised in that** the temperature in the hatching tank is maintained at approximately 22°C.

5. Method according to any of the preceding claims, **characterised in that** the temperature in the rearing tank is initially maintained at approximately 22°C before being gradually increased to approximately 28°C approximately 60 days after hatching

6. Method according to any of the preceding claims, **characterised in that** a periodic bathing of the pike-perch for 5 minutes in a saline solution with a salt content of 0.6% is undertaken every fifth day for approximately 60 days after hatching.

7. Method according to any of the preceding claims, **characterised in that** the water of the rearing tank is given a salt content not exceeding 0.5%.

8. Method according to any of the preceding claims, **characterised in that** any predators are sorted out, especially before transfer to the rearing tank.

9. Method according to any of the preceding claims, **characterised in that** before transfer to the rearing tank the pike-perch fry are sorted according to size and fry of a uniform size are transferred to separate rearing tanks for continued growth.

10. Method according to any of the preceding claims, **characterised in that** a bathing of the pike-perch for 5 minutes in a saline solution with a salt content of 0.6% is undertaken in conjunction with the transfer to the rearing tank.

## Patentansprüche

1. Verfahren zur Zucht von Euro-Asiatischem Zander, Stitzostedion lucioperca, **dadurch gekennzeichnet, dass** das Verdauungssystem des Zanders dazu gebracht wird, die Energie in einem Trockenfuttermittel zu verwerten, wobei der reife, befruchtete Zanderlaich in einen Bruttank verbracht wird, welcher Rotifera enthält, und worin die Schlupf stattfindet, wonach eine geringere Menge von Cladocera und Copepoda in den Bruttank überführt wird, und die Zanderbrut sich in dem Bruttank zunächst von Rotiferen und dann von Cladoceren und Copepoden ernährt, bis die Zanderlarven das Larvenstadium verlassen und das Fischbrutstadium erreichen und eine Länge von etwa 25-35mm erreicht haben, wonach die Brut in einen Zuchttank überführt wird, und die Gewöhnung an Trockenfuttermittel begonnen wird, wonach die Zucht bis einem Stadium durchgeführt wird, indem der Fisch reif zum Schlachten ist, wobei Trockenfuttermittel als alleinige Nahrungsquelle für den Fisch verwendet werden.

2. Verfahren nach Anspruch 1 **dadurch gekennzeichnet, dass** die Menge der Rotiferen in dem Bruttank zunächst bei etwa 0,5-2ml Biomasse pro 100 Liter Wasser gehalten wird.

3. Verfahren nach Anspruch 1 oder 2, **dadurch gekennzeichnet, dass** die Cladocera und Copepoda zunächst zu dem Bruttank in einer Menge von etwa 2ml Biomasse zugefügt werden.

4. Verfahren nach einem der vorstehenden Ansprüche, **dadurch gekennzeichnet, dass** die Temperatur in den Bruttank bei 22 Grad C gehalten wird.

5. Verfahren nach einem der vorstehenden Ansprüche, **dadurch gekennzeichnet, dass** die Temperatur in dem Zuchttank anfänglich bei etwa 22 Grad C gehalten wird, bevor die stufenweise auf etwa 28 Grad C etwa 60 Tage nach dem Schlupf erhöht wird.

6. Verfahren nach einem der vorstehenden Ansprüche, **dadurch gekennzeichnet, dass** ein periodisches 5-minütiges Bad der Zander in einer Salzlösung mit einem Salzgehalt von 0,6% an jedem 5. Tag für etwa 60 Tage nach dem Schlupf durchgeführt wird.

7. Verfahren nach einem der vorstehenden Ansprüche, **dadurch gekennzeichnet, dass** das Wasser in dem Zuchttank einen Salzgehalt von nicht mehr als 0,5% besitzt.

8. Verfahren nach einem der vorstehenden Ansprüche, **dadurch gekennzeichnet, dass** etwaige Raubfische aussortiert werden, insbesondere vor dem Transfer in den Zuchttank.

9. Verfahren nach einen der vorstehenden Ansprüche, **dadurch gekennzeichnet, dass** vor dem Transfer der Zuchttank die Zanderbrut entsprechend Ihrer Größe sortiert wird, und Brut einer gleichmäßigen Größe in getrennte Aufzuchtstanks für die Fortsetzung des Wachstums überführt werden.

10. Verfahren nach einem der vorstehenden Ansprüche , **dadurch gekennzeichnet, dass** ein 5-minütiges Baden der Zander in einer Salzlösung mit einem Salzgehalt von 0,6% in Verbindung mit dem Transfer in den Aufzuchtstank durchgeführt wird.

## Revendications

1. Procédé d'élevage commercial de poisson comestible appliqué au sandre d'Eurasie, le stitzostedion lucioperca, **caractérisé en ce que** l'on fait accepter et assimiler au système intestinal du sandre l'énergie contenue dans une alimentation sèche, le frai de sandre mature fertilisé étant relâché dans un bassin de reproduction contenant des rotifères, où on le laisse éclore, à la suite de quoi une plus faible quantité de cladocères et de copépodes est ajoutée au bassin de reproduction et on laisse le sandre se nourrir dans le bassin de reproduction, d'abord de rotifères, puis de cladocères et de copépodes jusqu'à ce que les larves de sandre aient quitté l'état larvaire et soient passées à l'état d'alevin et aient atteint une longueur d'approximativement 25 à 35 mm, à la suite de quoi les alevins sont transférés dans un bassin de reproduction et l'accoutumance à l'alimentation sèche commence, à la suite de quoi l'élevage jusqu'à un stade où les poissons sont prêts à être tués est entrepris avec une alimentation sèche comme unique source de nutrition pour les poissons.

2. Procédé selon la revendication 1, **caractérisé en ce que** la quantité de rotifères dans le bassin de reproduction est initialement maintenue d'environ 0,5 à 2 ml de biomasse par 100 litres d'eau.

3. Procédé selon la revendication 2, **caractérisé en ce que** les cladocères et les copépodes sont initialement ajoutés au bassin de reproduction en une quantité s'élevant à approximativement 2 ml de biomasse.

4. Procédé selon l'une quelconque des revendications précédentes, **caractérisé en ce que** la température dans le bassin de reproduction est maintenue à approximativement 22 °C.

5. Procédé selon l'une quelconque des revendications précédentes, **caractérisé en ce que** la température dans le bassin de reproduction est initialement maintenue à approximativement 22 °C avant d'être graduellement augmentée jusqu'à approximativement 28 °C approximativement 60 jours après l'éclosion.

6. Procédé selon l'une quelconque des revendications précédentes, **caractérisé en ce qu'**un bain périodique du sandre pendant 5 minutes dans une solution saline avec une teneur en sel de 0,6 % est effectué tous les cinq jours pendant approximativement 60 jours après l'éclosion.

7. Procédé selon l'une quelconque des revendications précédentes, **caractérisé en ce que** l'eau du bassin de reproduction a une teneur en sel ne dépassant pas 0,5 %.

8. Procédé selon l'une quelconque des revendications précédentes, **caractérisé en ce que** tout prédateur est séparé, particulièrement avant le transfert dans le bassin de reproduction.

9. Procédé selon l'une quelconque des revendications précédentes, **caractérisé en ce qu'**avant le transfert dans le bassin de reproduction, les alevins de sandre sont séparés en fonction de leur taille et les alevins d'une taille uniforme sont transférés dans des bassins de reproduction séparés pour une croissance continue.

10. Procédé selon l'une quelconque des revendications précédentes, **caractérisé en ce qu'**un bain du sandre de 5 minutes dans une solution saline avec une teneur en sel de 0,6 % est effectué conjointement avec le transfert dans le bassin de reproduction.
